# EUROPEAN PATENT APPLICATION

(11) **EP 1 997 669 A1**
(43) Date of publication of application: **03.12.2008**
(21) Application number: 06727326.8
(22) Date of filing: 17.03.2006
(51) Int. Cl.: B60N 2/28

(54) **BASE FOR A CHILD'S SAFETY SEAT FOR MOTOR VEHICLES**

(71) Applicant: PLAY, S.A., 08184 Palau de Plegamans (ES)
(72) Inventor: JANÉ STOPP, Joaquin, E-08184 Palau De Plegamans (ES)
(74) Representative: Ponti Sales, Adelaida
(86) International application number: PCT/IB2006/000597
(87) International publication number: WO 2007/107806

(57) **Abstract**

The base (1) for an security infant seat for automobiles comprises detachable fixating means of the infant seat to the base and the infant seat comprising a backrest (5) which can be inclined, and it is **characterised in that** said base (1) comprises movable resting means (2) of said backrest (5). Said movable resting means comprises a vertically movable support (2).

It permits the base to be adapted to the position of the backrest of the infant seat, or vice versa, preventing that the inclination of the backrest not to be the suitable depending on the weight of the child.

## Description

The present invention refers to a base for a security infant seat for automobiles.

### BACKGROUND OF THE INVENTION

It is compulsory that child in an automobile to seat in security infant seats specially design for it.

These infant seats are grouped in several groups, depending on the weight of the child which uses them. Some of the seats for baby and up to 9 kg. (Group 0) can be used also in conventional strollers, i.e. they have a double use: to move the baby in the stroller and to be used in the automobile as security seat.

These security seats can be placed in the front or rear seat and are fixed to the automobile seat by the seat belt of the vehicle or by hooks, known as Isofix.

When the fixation is done with the seat belt of the vehicle, it is done passing the seat belt under the seat and on the upper part of the backrest. The seat belt must be passed through some lateral grooves provided in the lower part of the and through a groove provided in the upper part of the backrest to fix the seat belt in position.

It has been proved in the practice that the placement of the seat belt inside the lateral grooves of the lower part of the seat is uncomfortable, and it can be complicated if the adult which places the seat belt has no practice.

To solve these drawbacks the fixing system discloses in ES200200603 was devised, of the same application as this application.

This document discloses a base which is fixed by the seat belt of the automobile, on which the infant seat is detachably fixed.

On the other hand, security infant seats are known with its reclining backrest between several positions, depending on the child age with uses it. Even though all the security requirements are fulfil, the backrest of these seats does not rest against the base, because said base is fixed, i.e., it is not provided with any element which adapts to the variable position of said backrest.

### DESCRIPTION OF THE INVENTION

With the base of the invention said drawbacks can be solved, presenting other advantages that will be described.

The base for a security infant seat for automobiles comprises detachable fixating means of the infant seat to the base and the infant seat comprising a backrest which can be inclined, and it is characterised in that said base comprises movable resting means of said backrest.

Advantageously, said movable resting means comprises a vertically movable support.

Furthermore, said support comprises in its upper part a housing for an element provided in the backrest of the infant seat.

Advantageously, said support is inclined, and its inclination can be regulated.

Preferably, the backrest of the infant seat comprises a rod which can be placed in a plurality of positions.

According to a first embodiment, said element which is placed inside the housing is said rod provided in the backrest of the infant seat.

According to a second embodiment, said housing has a tubular shape, and said element is a protrusion which is placed inside said housing of tubular shape. Said protrusion is integral to said rod provided in the backrest of said infant seat.

The base of the present invention permits the base to be adapted to the position of the backrest, or vice versa, preventing therefore the inclination of the backrest not to be suitable depending on the weight of the child.

### BRIEF DESCRIPTION OF THE DRAWINGS

For a better understanding of what has been disclosed, some drawings are attached in which, diagrammatically and only a non-limitative example, a practical case of embodiment is shown.
Fig. 1 is a perspective view of the base of the present invention, according to a first embodiment;
Fig. 2 and 3 are perspective views of the infant seat placed on the base according to said first embodiment, the support of the base being in two different positions, as the rod provided in the backrest of the infant seat;
Fig. 4 and 5 are perspective views of the base with the infant seat placed in position, according to a second embodiment, before the engagement between the support and the stem provided in the rod; and
Fig. 6-8 are perspective views of the base of the present invention according to said second embodiment, the support being placed in three different positions.

### DESCRIPTION OF A PREFERRED EMBODIMENT

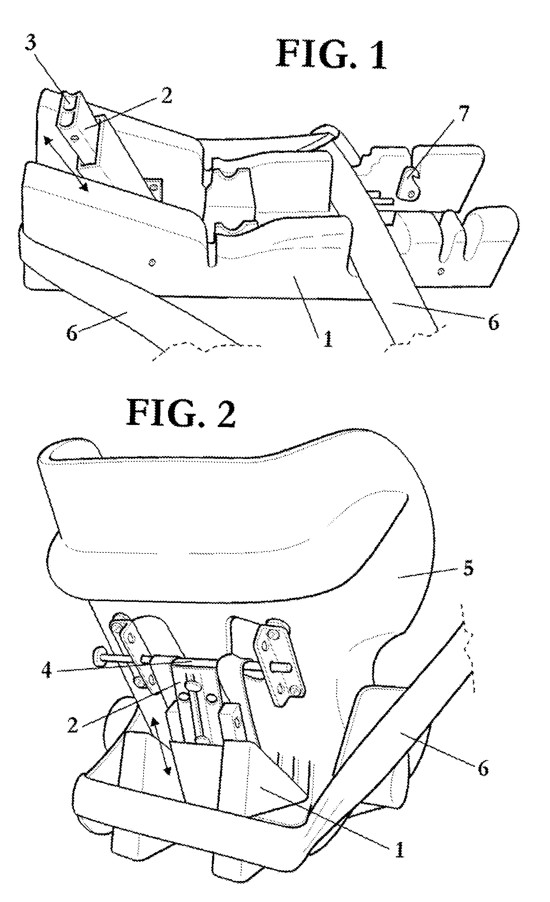

The base of the present invention, identified generally by numeral reference 1 and shown in Fig. 1, comprising a support 2 vertically movable.

The base 1 also comprises detachable fixing means of the infant seat and securing means of the seat belt 6. Even though it is not shown, the base 1 can also comprise the securing system known as Isofix, formed by hooks which are fixed to bars provided in the automobile seat.

E.g. the detachable fixing means can comprise some hooks 7. It must be understood, however, that these detachable fixing and securing means may be any, and can be deduced easily by any person skilled in the art. Furthermore, said means are not described nor shown in detail because they do not form part of the present invention.

Said support 2, which is slightly inclined, as can be seen in Fig. 1, and whose inclination can be regulated if it is desired, is vertically movable, and comprises in its upper part a housing 4 for a rod 4 provided in the rear part of the backrest 5 of the infant seat.

Said infant seat comprises a hinged backrest 5, whose inclination can be regulated between a plurality of positions. This infant seat can be used in an automobile as security seat and also in a stroller or even as rocking seat. Depending on the child age, the backrest can be placed more or less inclined when it is used in the stroller or when it is used as rocking seat, however, when it is used in an automobile, the inclination depends only on the weight and the age of the child which uses it.

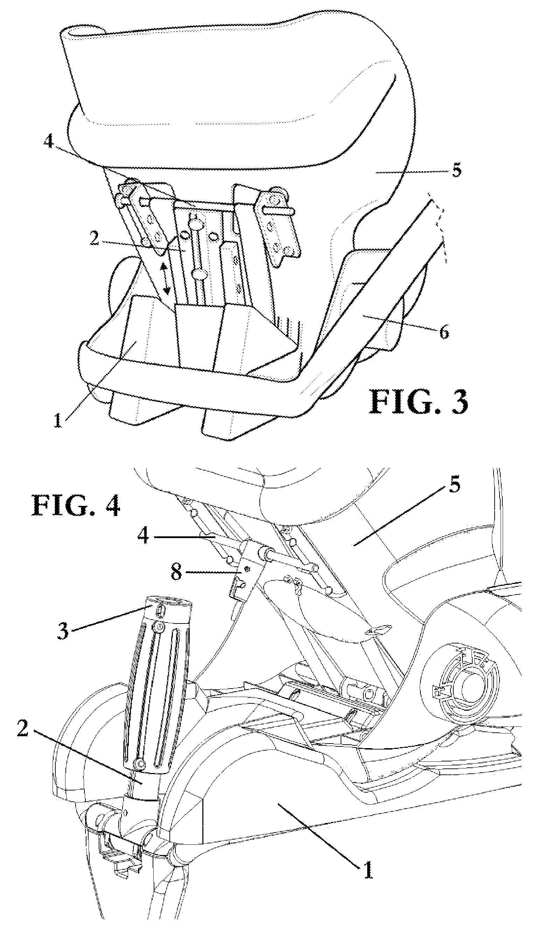

Said rod 4 can be placed in a plurality of positions, two of which are shown in Fig. 2 and 3. Even though in the figures the rod 4 is shown housed in holes, it is apparent that the regulation of the position of said rod 4 can be done in any suitable way.

For a correct use of the securing system of the present invention, the support 2 must be placed in its correct position, which will depend on the weight of the child which uses the infant seat. For this reason, it is provided said support to include a plurality of indications for the different possible positions of it.

Correspondingly, the backrest must be placed also in its suitable position depending on the weight of the child which uses it.

When the infant seat is engaged on the base 1, the rod 4 must be housed inside the housing 3 provided in its upper part. If this is not done, it means that the position of the seat backrest or of the support is wrong. Therefore, the possibility of misuse of the infant seat in an automobile because of the wrong position of the backrest is prevented.

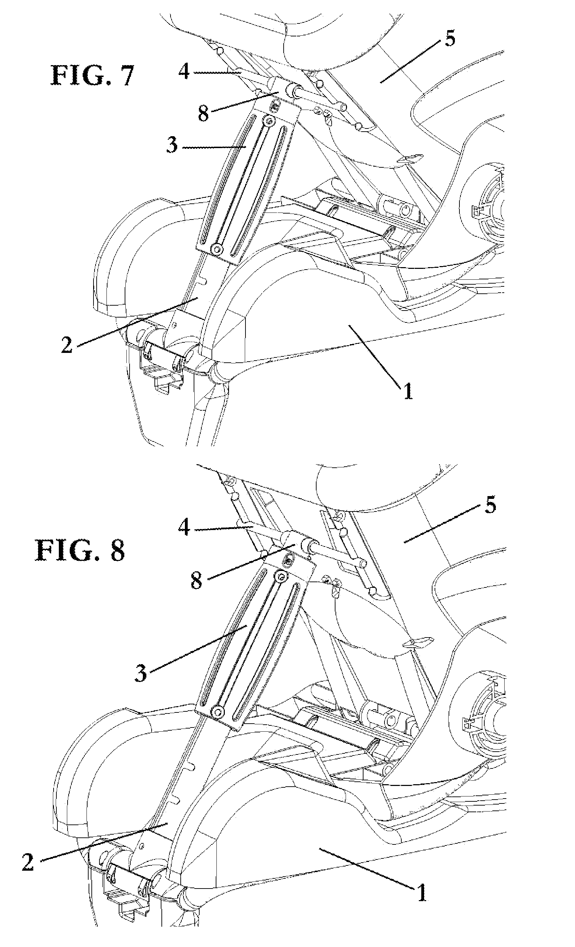

In Fig. 4-8 is shown a second embodiment of the base 1 of the present invention. The operation of this base 1 is substantially the same as the embodiment previously described.

In this second embodiment the same numeral references are used for the same or equivalent elements to the previous embodiment.

The main difference between these embodiments is that in this second embodiment the housing 3 has a tubular shape, inside which is housed a protrusion 8 provided in the rod 4 placed in the backrest 5 of the infant seat.

Also in this case the rod 4 can be placed in several positions in the backrest, depending on the weight of the child which uses the seat.

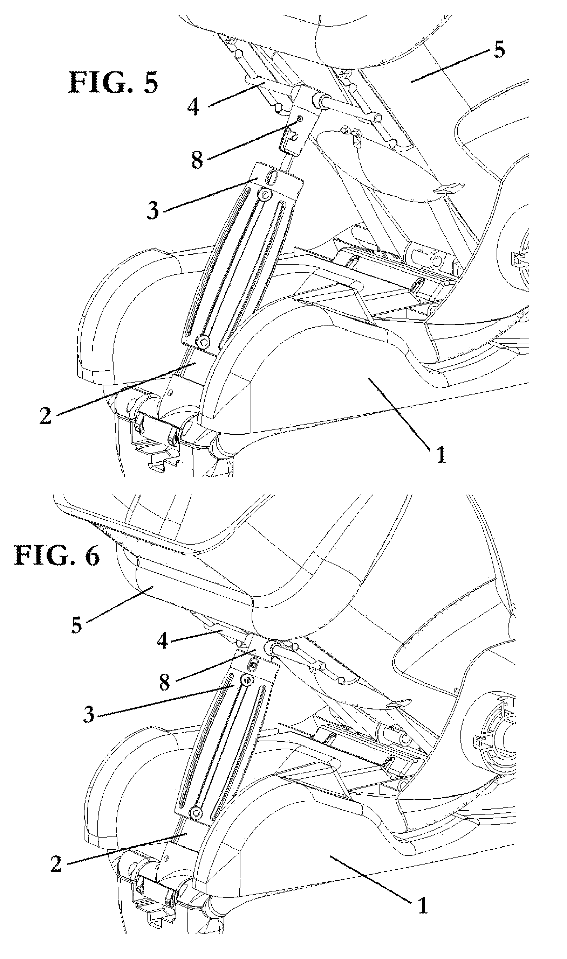

As can be seen in Fig. 4 and 5, to use the infant seat correctly in the automobile the tubular housing 3 and the protrusion 8 of the rod 4 must be aligned to permit the protrusion 8 to enter inside the housing 3 (Fig. 5). In the case that they are not aligned (Fig. 4) the protrusion 8 cannot be housed inside said housing 3, preventing the use of the seat, because the person who places the seat on the base 1 will see easily that there is an error in the placement of the support 2 or of the rod 4, and he/she could consult the instructions to establish which of these element is in a wrong position depending on the weight of the child which will use the seat.

In Fig. 6-8 can be seen that the housing 3 is movable along the support 2, so that it can adopt several positions. These positions determine the inclination of the backrest, as can be seen from the figures.

Even though reference is made to a specific embodiment of the invention, it is apparent for a person skilled in the art that the disclosed base is susceptible of several variations and modifications, and that all the details can be substituted by other technically equivalent ones, without departing from the scope of protection defined by the attached claims.

## Claims

1. Base (1) for a security infant seat for automobiles, said base (1) comprising detachable fixating means of the infant seat to the base and the infant seat comprising a backrest (5) which can be inclined, **characterised in that** said base (1) comprises movable resting means (2) of said backrest (5).

2. Base according to claim 1, **characterised in that** said movable resting means comprises a vertically movable support (2).

3. Base according to claim 2, **characterised in that** said support (2) comprises in its upper part a housing (3) for an element (4; 8) provided in the backrest (5) of the infant seat.

4. Base according to claim 2, **characterised in that** said support (3) is inclined.

5. Base according to claim 3, **characterised in that** the backrest (5) of the infant seat comprises a rod (4) which can be placed in a plurality of positions.

6. Base according to claims 3 and 5, **characterised in that** said element which is placed inside the housing (3) is said rod (4) provided in the backrest (5) of the infant seat.

7. Base according to claim 3, **characterised in that** said housing (3) has a tubular shape.

8. Base according to claims 3 and 7, **characterised in that** said element is a protrusion (8) which is placed inside said housing (3) of tubular shape.

9. Base according to claim 8, **characterised in that** said protrusion (8) is integral with said rod (4) provided in the backrest (5) of said infant seat.

10. Base according to claim 4, **characterised in that** the inclination of said support (2) can be regulated.
